Europäisches Patentamt

European Patent Office

Office européen des brevets

(19)

(11) Veröffentlichungsnummer: **0 058 876**
**B1**

(12) **EUROPÄISCHE PATENTSCHRIFT**

(45) Veröffentlichungstag der Patentschrift:
24.07.85

(21) Anmeldenummer: **82100945.3**

(22) Anmeldetag: **10.02.82**

(51) Int. Cl.⁴: **H 02 G 3/22,** H 01 R 4/64,
H 01 R 13/24

(54) Vorrichtung zur Abschirmung elektrischer und elektromagnetischer Wellen bei dichten Durchführungen für Leitungsbündel durch eine Wand.

(30) Priorität: **13.02.81 DE 3105182**

(43) Veröffentlichungstag der Anmeldung:
**01.09.82 Patentblatt 82/35**

(45) Bekanntmachung des Hinweises auf die Patenterteilung:
**24.07.85 Patentblatt 85/30**

(84) Benannte Vertragsstaaten:
**AT BE CH FR GB IT LI NL SE**

(56) Entgegenhaltungen:
**EP - A - 0 016 367**
**CH - A - 373 083**

(73) Patentinhaber: **System- und Verfahrenstechnik Verwaltungsgesellschaft mbH, Maschener Schützenstrasse 45, D-2105 Seevetal 3 (DE)**

(72) Erfinder: **Buch, Jürgen Heinrich, Fachenfelder Weg 89, D-2105 Seevetal 3 (DE)**
Erfinder: **Tischer, Georg, Dr., Sprollstrasse 47, D-7000 Stuttgart (DE)**

(74) Vertreter: **Schmidt-Bogatzky, Jürgen, Dr. Ing., Schlossmühlendamm 4, D-2100 Hamburg 90 (DE)**

**Beschreibung**

Die Erfindung betrifft eine Vorrichtung zur Abschirmung elektrischer und elektromagnetischer Wellen bei dichten Durchführungen für Leitungsbündel durch eine Wand, die einen an der Durchgangsstelle der Wand zu befestigenden, druckfesten Rahmen umfasst, in dem der freie Raum zwischen den einzelnen Leitungen des Bündels und dem Rahmen durch baukastenartig über- und nebeneinanderliegende, ganz oder teilweise elastische Passstücke und Nullstücke sowie einem Pressstück aus bei Hitze quellfähigem, eingelagerte elektrisch leitfähige Metallpartikel aufweisendem Material vollständig ausgefüllt ist, wobei jeder Leitung ein aus jeweils zwei Passstückhälften bestehendes Passstück zugeordnet ist und diese Passstückhälften mit von ihren Berührungsflächen ausgehenden dem Querschnitt der einzulegenden Leitung nach Form und Grösse angepassten Ausnehmungen versehen sind, in denen jeweils ein halbkreisförmiger Steg ausgebildet ist, der in eine in dem Mantel der Leitung ausgebildete Nut derart eingreift, dass die Oberfläche eines jeden Steges dem Abschirmmantel der Leitung gegenüber liegt, wobei die Passstücke mit den Nullstücken mittels des Pressstückes unter in der Rahmenebene wirkenden Druck stehen, durch den sie miteinander, mit den Leitungen und mit der Rahmenwand in wasser-, gas- und feuerdichter Anlage gehalten werden und durch den die elektrisch leitfähigen Metallpartikel gegeneinander und gegen die innere Wandung des Rahmens und den Abschirmmantel einer jeden Leitung anliegen.

Eine derartige Vorrichtung ist bereits durch die EP-A-16 367 bekannt geworden. Es hat sich jedoch gezeigt, dass es mittels dieser Vorrichtung nicht möglich ist, im Bereich niedriger Frequenzen einen ausreichend niedrigen Kopplungswiderstand zu erzielen, so dass in diesem Frequenzbereich keine sichere Abschirmwirkung gegeben ist. Ferner ist es für Kabelhalter durch die CH-A-373 083 bekannt, Metallstreifen als Abschirmungsbänder zu verwenden, die einerseits mit den Abschirmungsmänteln der Kabel und andererseits mit einem geerdeten Teil der Vorrichtung in Wirkverbindung stehen. Diese Lösung lässt sich jedoch nicht für Vorrichtungen nach der EP-A 16 367 anwenden, da hierzu eine mit dem Rahmen der Kabeldurchführung verbundene Metallplatte erforderlich wäre, um hieran die Abschirmungsbänder anschliessen zu können. Dieses macht jedoch eine arbeitsaufwendige Montage erforderlich, da es bei einer Erneuerung oder Ergänzung der durch den Rahmen geführten Leitungen stets erforderlich wäre, die Verbindung zwischen Rahmen und Metallplatte und Metallplatte und Leitungen wieder aufzutrennen.

Die Aufgabe der Erfindung besteht darin, die durch die EP-A-16 367 bekannte Vorrichtung so zu verbessern, dass die Abschirmung sowohl gegen hochfrequente wie auch gegen niederfrequente elektrische oder elektromagnetische Wellen gewährleistet ist, ohne dass die Abdichtung der durch die Vorrichtung geführten Leitungen bei höherem Druck oder Brand beeinträchtigt wird.

Erfindungsgemäss erfolgt die Lösung der Aufgabe durch die Kombination folgender Merkmale:

a) beide Passstückhälften weisen im Bereich der Stege senkrecht zu ihrer Berührungsebene verlaufende, schlitzartige Durchbrechungen auf, in die je ein flexibles Abschirmband aus Kupfer, verzinntem Kupfer od.dgl. eingelegt ist, und jedes dieser Abschirmbänder liegt mit einem ersten Endabschnitt an der Oberfläche des halbkreisförmigen Steges der zugehörigen Passstückhälfte und mit einem zweiten Endabschnitt an der von der schlitzartigen Durchbrechung durchragten Aussenfläche der jeweiligen Passstückhälfte an,

b) auf den Steg bzw. auf den schon dort befindlichen Abschirmband-Endabschnitt in der Ausnehmung jeweils der ersten Passstückhälfte jedes Passstückes ist ein drittes flexibles Abschirmband aus Kupfer, verzinntem Kupfer od.dgl. gelegt, dessen beide Enden sich über die der zweiten Passstückhälfte desselben Passstückes zugewandten Fläche der ersten Passstückhälfte erstrecken und mit abgewinkelten Endabschnitten an den Seitenflächen dieser Passstückhälfte anliegen,

c) in dem Rahmen ist zwischen jeder Passstückreihe ein Kontaktblech angeordnet, dessen Endabschnitte an den Seitenwänden des Rahmens anliegen.

Weiterbildungen der Erfindung werden in den Unteransprüchen beschrieben und anhand der in den Zeichnungen beispielsweise dargestellten Vorrichtung näher erläutert. Es zeigt

Fig. 1 die erfindungsgemässe Vorrichtung in einem Ausschnitt in einer Ansicht von vorn im Schnitt,

Fig. 2 zwei zusammengehörige erfindungsgemässe Passstückhälften in einer schaubildlichen Ansicht in einer Explosionsdarstellung,

Fig. 3 die untere Passstückhälfte nach Fig. 2 in einer Draufsicht,

Fig. 4 die Passstückhälften nach Fig. 2 mit eingelegtem Abschirmband in einer schaubildlichen Ansicht in einer Explosionsdarstellung.

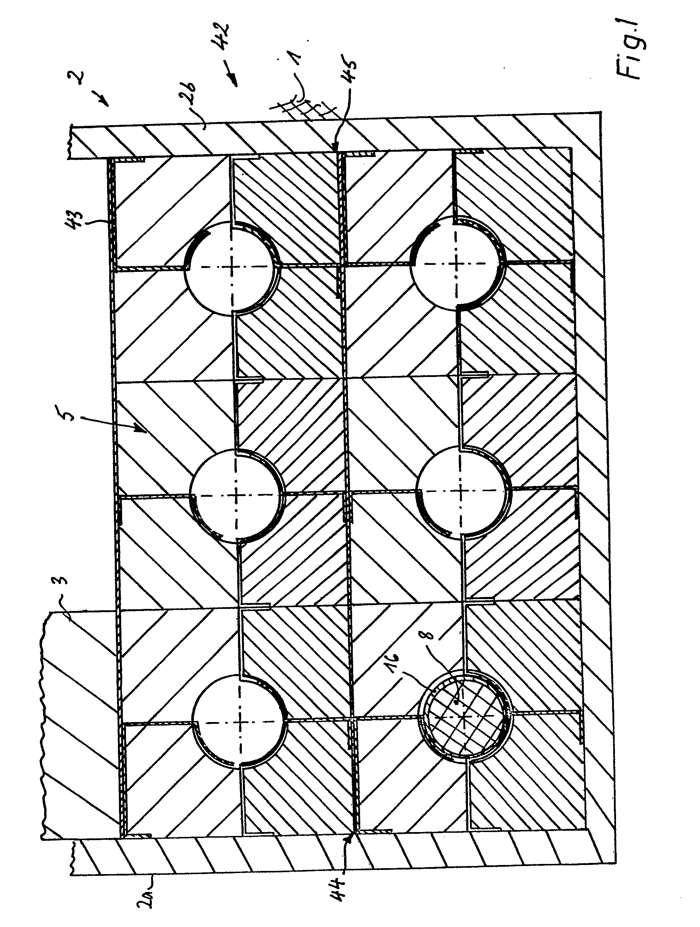

In Fig. 1 ist ein Ausschnitt eines Rahmens 2 dargestellt, der in eine Durchbrechung in einer Wand 1 eingesetzt ist. In dem Rahmen sind modulartig Nullstücke 3 und Passstücke 5 angeordnet. Die Nullstücke 3 können in bekannter Weise als Mehrkammernullstücke ausgebildet sein. Jedes Passstück 5 besteht aus zwei Passstückhälften 6, 7, die eine Leitung 8 umfassen und ist so ausgebildet, dass es einen direkten mechanischen Kontakt mit dem Abschirmmantel 16 einer Leitung 8 ermöglicht.

Die Passstücke 5 ebenso wie die Klemmstücke des nicht näher dargestellten Pressstücks und die Nullstücke 3 bestehen aus einem elastischen, bei Hitzeeinwirkung quellfähigem Material, in das elektrisch leitende Metallpartikel eingelagert sind. Eine durchgehende Abschirmung gegen hochfrequente Wellen wird durch Verformung der Passstücke 5, Pressstücke und Nullstücke 3 gegeneinander und gegen die Innenwandung des Rahmens 2 erzielt. Wesentlich hierfür ist, dass das Material der Passstücke 5, Pressstücke und Nullstücke 3 im unverformten Zustand nur ungenügend leitfähig ist, bei Verformung jedoch durch Verschiebung der eingelagerten leitfähigen Metallpartikel eine über den jeweiligen Querschnitt sich erstreckende Leitfähigkeit erlangt. Hierdurch wird gleichzeitig mit einer Abdichtung der Durchführung gegen Feuer, Glas und Wasser eine Abschirmung gegen hochfrequente Wellen erzielt. Zusätzlich ist noch jeder Abschirmmantel 16 einer Leitung 8 mit einem Abschirmband 32 verbunden, das direkt oder über zwischen den horizontalen Passstückreihen 42 befindlichen Kontaktblechen 43 mit dem Rahmen 2 in elektrisch leitender Verbindung steht.

In den Passstückhälften 6, 7 ist eine Ausnehmung 30, 31 mit jeweils zwei randseitigen halbkreisförmigen Vertiefungen 9, 10 ausgebildet. Die Radien dieser Vertiefungen 9, 10 entsprechen dem äusseren Radius der einzulegenden Leitung 8. Zwischen den Vertiefungen 9, 10 ist in jeder Passstückhälfte 6, 7 ein halbkreisförmiger Steg 12, 13 mit Oberflächen 11, 11a ausgebildet.

Im montierten Zustand befinden sich die halbkreiskförmigen Stege 12, 13 in einer in der Umhüllung der Leitung 8 ausgebildeten, sich bis zum Abschirmmantel 16 erstreckenden Ringnut.

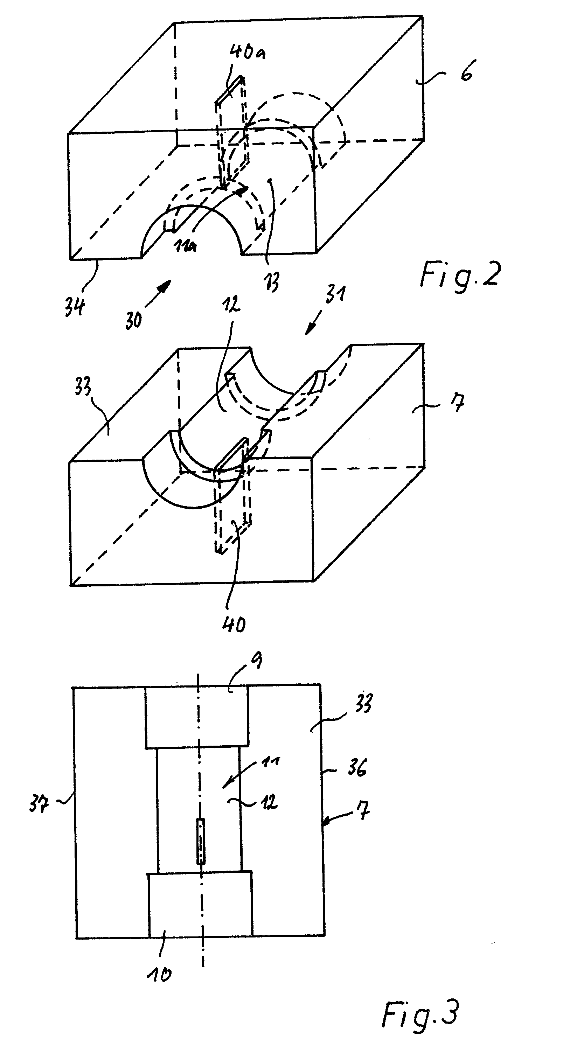

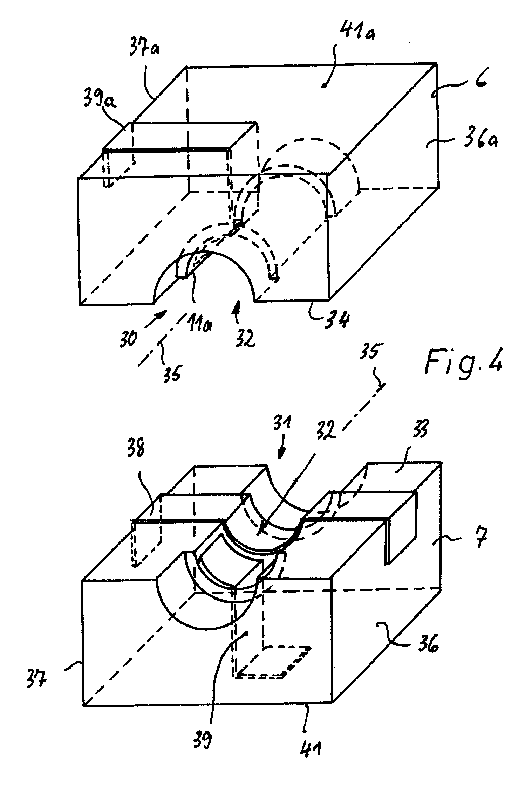

Wie in den Fig. 2 bis 4 dargestellt, ist in den Stegen 12, 13 der Passstückhälften 6, 7 senkrecht zur Mittelachse 35 und zu den Aussenflächen 41, 41a der Passstückhälften 6, 7 je eine schlitzartige Durchbrechung 40, 40a ausgebildet, in denen Abschirmbänder 39, 39a liegen, die zum Beispiel aus einem verzinnten flexiblen Flachband aus Kupfer oder dergleichen bestehen können. Erste Endabschnitte der Abschirmbänder 39, 39a liegen an der Oberfläche 11, 11a der halbkreisförmigen Stege 12, 13 an und die zweiten Endabschnitte an der von der schlitzartigen Durchbrechung 40, 40a durchragten Aussenfläche 41, 41a der jeweiligen Passstückhälfte 6, 7. Der zweite Endabschnitt des Abschirmbandes 39a liegt auch an der Seitenfläche 37a der Passstückhälfte 6 an.

Auf den Steg 12 bzw. auf den schon dort befindlichen Abschirmband-Endabschnitt in der Ausnehmung 31 jeweils der ersten Passstückhälfte 7 jedes Passstückes 5 ist ein drittes flexibles Abschirmband 32 aus Kupfer, verzinntem Kupfer od. dgl. gelegt, dessen beide Enden sich über die der zweiten Passstückhälfte 6 desselben Passstückes zugewandte Fläche der ersten Passstückhälfte 7 erstrecken und mit abgewinkelten Endabschnitten an den Seitenflächen 36, 37 dieser Passstückhälfte 7 anliegen.

Bei zu einem Passstück 5 zusammengesetzten Passstückhälften 6, 7 ist somit an jeder parallel zur Leitung 8 angeordneten Seitenfläche ein Abschnitt eines Abschirmstreifens 38, 39, 39a angeordnet, der bei Beschickung des Rahmens 2 mit weiteren Passstücken 5 an deren Abschirmstreifen 38, 39, 39a zur Anlage kommt. Zum Ausgleich von Ungenauigkeiten bzw. Einflüssen des Einbaus von Nullstücken 3 ist zwischen jeder horizontalen Passstückreihe 42 ein Kontaktblech 43 angeordnet. Die Endabschnitte 44, 45 eines jeden Kontaktbleches 43 umgreifen jeweils die obere Passstückhälfte 6 der den Seitenwänden des Rahmens 2 zugeordneten Passstücke 5. Diese Endabschnitte 44, 45 liegen an dem Rahmen 2 an.

Mittels der beschriebenen Vorrichtung ist es möglich, bekannte Kabeldurchführungen zum Einbau in Raumschienen mit angepasster Abschirmwirkung gegen elektromagnetische Felder und mit niedrigem Kopplungswiderstand zu Kabelabschirmungen zu verwenden. Wichtig ist hierbei, dass eine direkte Kontaktierung der freigelegten metallenen Hüllen von durchzuführenden Leitungen 8 erfolgt. Die Kontaktierung der Abschirmmäntel 16 an den Aussenrahmen der Durchführung erfolgt durch symmetrische Anordnung der Abschirmstreifen 38, 39, 39a. Der entscheidende Vorteil der beschriebenen Vorrichtung besteht darin, dass der Kopplungswiderstand im Bereich niederer Frequenzen auf notwendig niedere Werte gebracht wird, die mit den leitfähigen Passstücken 5, Nullstücken 3 und dem Pressstück für sich nicht erzielbar wären. Ferner wird der bei zunehmender Frequenz ansteigende induktive Anteil des Kopplungswiderstandes der Abschirmbänder 32 durch die leitfähigen Passstücke 5 und Nullstücke 3 auf ein erträgliches Mass begrenzt. Hierdurch wird eine weitere Stabilisierung der Abschirmung bewirkt.

**Patentansprüche**

1. Vorrichtung zur Abschirmung elektrischer und elektromagnetischer Wellen bei dichten Durchführungen für Leitungsbündel durch eine Wand, die einen an der Durchgangsstelle der Wand zu befestigenden, druckfesten Rahmen (2) umfasst, in dem der freie Raum zwischen den einzelnen Leitungen (8) des Bündels und dem Rahmen (2) durch baukastenartig über- und nebeneinanderliegende, ganz oder teilweise elastische Passstücke (5) und Nullstücke (3) sowie einem Pressstück aus bei Hitze quellfähigem, eingelagerte elektrisch leitfähige Metallpartikel aufweisendem Material vollständig ausgefüllt ist, wobei jeder Leitung (8) ein aus jeweils zwei Passstückhälften (6, 7) bestehendes Passstück (5) zugeordnet ist und diese Passstückhälften (6, 7) mit von ihren Berührungsflächen ausgehenden dem Querschnitt der einzulegenden Leitung (8) nach Form und Grösse angepassten Ausnehmungen (30, 31) versehen sind, in denen jeweils ein halbkreisförmiger Steg (12, 13) ausgebildet ist, der in eine in dem Mantel der Leitung (8) ausgebildete Nut derart eingreift, dass die Oberfläche (11, 11a) eines jeden Steges (12, 13) dem Abschirmmantel (16) der Leitung (8) gegenüberliegt, wobei die Passstücke (5) mit den Nullstücken (3) mittels des Pressstückes unter in der Rahmenebene wirkenden Druck stehen, durch den sie miteinander, mit den Leitungen (8) und mit der Rahmenwand in wasser-, gas- und feuerdichter Anlage gehalten werden und durch den die elektrisch leitfähige Metallpartikel gegeneinander und gegen die innere Wandung des Rahmens (16) und den Abschirmmantel einer jeden Leitung (8) anliegen, gekennzeichnet durch die Kombination folgender Merkmale:

a) beide Passstückhälften (5, 7) weisen im Bereich der Stege (12, 13) senkrecht zu ihrer Berührungsebene verlaufende, schlitzartige Durchbrechungen (40, 40a) auf, in die je ein flexibles Abschirmband (39, 39a) aus Kupfer, verzinntem Kupfer od.dgl. eingelegt ist, und jedes dieser Abschirmbänder (39, 39a) liegt mit einem ersten Endabschnitt an der Oberfläche (11, 11a) des halbkreisförmigen Steges (12, 13) der zugehörigen Passstückhälfte (6, 7) und mit einem zweiten Endabschnitt an der von der schlitzartigen Durchbrechung (40, 40a) durchragten Aussenfläche (41, 41a) der jeweiligen Passstückhälfte (6, 7) an,

b) auf den Steg (12) bzw. auf den schon dort befindlichen Abschirmband-Endabschnitt in der Ausnehmung (31) jeweils der ersten Passstückhälfte (7) jedes Passstückes (5) ist eine dritte flexibles Abschirmband (32) aus Kupfer, verzinntem Kupfer od.dgl. gelegt, dessen beide Enden sich über die der zweiten Passstückhälfte (6) desselben Passstückes zugewandte Fläche der ersten Passstückhälfte (7) erstrecken und mit abgewinkelten Endabschnitten an den Seitenflächen (36, 37) dieser Passstückhälfte (7) anliegen,

c) in dem Rahmen (2) ist zwischen jeder Passstückreihe (42) ein Kontaktblech (43) angeordnet, dessen Endabschnitte (44, 45) an den Seitenwänden (2a, 2b) des Rahmens (2) anliegen.

2. Vorrichtung nach Anspruch 1, dadurch gekennzeichnet, dass der durch die schlitzartige Durchbrechung (40a) geführte Endabschnitt des Abschirmstreifens (39a) auch an einer Seitenfläche (36a oder 37a) der Passstückhälfte (6) anliegt.

3. Vorrichtung nach Anspruch 1 oder 2, dadurch gekennzeichnet, dass die Endabschnitte (44) der Kontaktbleche (43) rechtwinklig abgekantet sind und jeweils an der einer Seitenwand (2a, 2b) des Rahmens (2) zugeordneten Seitenwand (37a, 36a) einer am Rand der Passstückreihe (42) angeordneten oberen Passstückhälfte (6) anliegen.

**Claims**

1. Apparatus for shielding electric and electromagnetic waves in the case of tight ducts for groups of lines through a wall, comprising a pressure-resistant frame to be fixed at the wall passage point and in which the free space between the individual lines (8) of the group and the frame (2) is completely filled by unit-type, juxtaposed and superimposed, wholly or partially elastic mating parts (5) and neutral parts (3), as well as a pressed part formed from heat-swellable material having incorporated electrically conductive metal particles, whereby with each line (8) is associated a mating part (5) in each case comprising two mating part halves (6, 7), which are provided with recesses (30, 31) emanating from their contactfaces and adapted to the cross-section of the line (8) to be inserted on the basis of shape and size, whereby in each recess is constructed a semicircular web (12, 13), which engages in a slot formed in the covering of line (8) in such a way that the surface (11, 11a) of each web (12, 13) faces the shielding cover (16) of line (8), the mating parts (5) with the neutral parts (3) being under the pressure acting in the frame plane by means of the pressed part, so that they are held together, with the lines (8) and with the frame wall in water, gas and fireproof engagement and through which the electrically conductive metal particles engage against one another and against the inner wall of frame (16) and the shielding cover of each line (8), characterized by the combination of the following features:

a) both mating part halves (6, 7) have slot-like openings (40, 40a) in the vicinity of webs (12, 13) and at right angles to the tangential plane thereof and in each of these openings is inserted a flexible shielding strip (39, 39a) made from copper, tin-plated copper, etc and each of these shielding strips (39, 39a) engages with a first end portion on the surface (11, 11a) of the semicircular web (12, 13) of the associated mating part half (6, 7) and with a second end portion on the outer surface (41, 41a) of the particular mating part half (6, 7) traversed by the slot-like opening (40, 40a);

b) on the web (12) and/or on the already located there shielding strip end portion in recess (31) of in each case the first mating part half (7) of each mating part (5) is placed a third flexible shielding strip (32) of copper, tin-plated copper, etc, whose two ends extend over the surface of the first mating part half (7) facing the second mating part half (6) of the same mating part and engage with bent end portions on the lateral faces (36, 37) of said mating part half (7);

c) between each mating part series (42) in frame (2) is arranged a contact plate (43), whose end portions (44, 45) engage on the side walls (2a, 2b) of frame (2).

2. Apparatus according to claim 1, characterized in that the end portion of the shielding strip (39a) pass through the slot-like opening (40a) also engages on the lateral face (36a) or (37a) of the mating part half (6).

3. Apparatus according to claims 1 or 2, characterized in that the end portions (44) of the contact plates (43) are bent at right angles and engage in each case on the lateral face (37a, 36a) of an upper mating part half (6) arranged on the edge of the mating part series (42) associated with one side wall (2a, 2b) of frame (2).

**Revendications**

1. Dispositif pour le blindage contre les ondes électriques et électromagnétiques dans les passages étanches de faisceaux de conducteurs à travers une cloison, qui comprend un châssis (2) résistant à la pression qui doit être fixé à l'emplacement de la traversée de la cloison, où l'espace libre entre les différents conducteurs (8) du faisceau et le châssis (2) sont remplis complètement par des pièces ajustées (5) et des pièces (3) de remplissage ainsi que par une pièce de serrage, entièrement ou partiellement élastiques, placées les unes sur les autres ou les unes à côté des autres, en forme de caissons, faites d'une manière capable de gonfler à la chaleur, comportant des particules métalliques conductrices de l'électricité qui y sont incorporées, pendant qu'à chaque conducteur (8) est associé une pièce ajustée (5), constituée de deux moitiés (6, 7) et que ces moitiés (6, 7) sont pourvues de cavités (30, 31), partant de leurs surfaces de contact, adaptées par leurs formes et leurs dimensions à la section des conducteurs qui doivent y être posés, et dans lesquelles il est réalisé, chaque fois, un plan profilé (12, 13) en forme de demi-cercle, qui s'engage dans une gorge pratiquée dans l'enveloppe du conducteur, de façon telle que la surface (11, 11a) de chaque plan profilé (12, 13) se trouve faire face à l'enveloppe de blindage (16) du conducteur (8), pendant que les pièces ajustées (5), avec les pièces de remplissage (3) sont soumises; au moyen d'une pièce de serrage, à une pression agissant dans le plan du châssis, sous l'effet de laquelle elles sont maintenues, ensemble, avec les conducteurs (8) et avec la paroi du châssis, en appui étanche à l'eau, au gaz et au feu, et sous l'effet de laquelle les particules métalliques conductrices de l'électricité s'appliquent les unes contre les autres et contre la paroi intérieure du châssis (16) et l'enveloppe de blindage de chacun des conducteurs (8), dispositif caractérisé par la combinaison des caractéristiques suivantes:

a) les deux moitiés (6, 7) des pièces ajustées présentent, dans la zone des plans profilés (12, 13) des entailles (40, 40a) en forme de fentes, qui s'étendent perpendiculairement à leurs plans de contact, dans chacune desquelles est insérée une bande de blindage (39, 39a) flexible, en cuivre, cuivre étamé, ou autre, et chacune de ces bandes (39, 39a) de blindage s'applique par une première section terminale sur la surface (11, 11a) du plan profilé (12, 13) demi-circulaire de la moitié (6, 7) de la pièce ajustée afférente, et, par une seconde section terminale, sur la surface extérieure (41, 41a) traversée par l'entaille (40, 40a) en forme de fente de la moitié (6, 7) de la pièce ajustée dont il s'agit,

b) sur le plan profilé (12), ou sur la section terminale de la bande de blindage qui se trouve déjà à cet endroit dans la cavité (31) de la première moitié (7) de chaque pièce ajustée (5), il est posé une troisième bande de blindage (32) flexible, en cuivre, cuivre étamé ou autre, dont les deux extrémités s'étendent sur la surface de la première moitié (7) de pièce ajustée tournée vers la seconde moitié (6) de la même pièce ajustée, et s'appliquent, par les sections terminales repliées, sur les surfaces latérales (36, 37) de cette moitié (7) de pièce ajustée,

c) dans le châssis (2), il est disposé entre chaque rangée (42) de pièces ajustées, une tôle de contact (43), dont les sections terminales (44, 45) s'appliquent sur les surfaces latérales (2a, 1b) du châssis.

2. Dispositif suivant la revendication 1, caractérisé en ce que la section terminale de la bande de blindage (39a) qui passe dans l'entaille (40a) en forme de fente, s'applique aussi sur une surface latérale (36a ou 37a) de la moitié (6) d'une pièce ajustée.

3. Dispositif suivant la revendication 1 ou 2, caractérisé en ce que les sections terminales (44) des tôles de contact (43) sont repliées à angle droit et s'appliquent, chaque fois, sur la paroi latérale (37a, 36a) d'une moitié (6) supérieure de pièce ajustée placée sur le bord de la rangée (42) de pièces ajustées adjacente à l'une des parois latérales (2a, 1b) du châssis (2).

Fig.1

0 058 876

Fig.2

Fig.3

Fig.4